# EUROPEAN PATENT APPLICATION

(11) **EP 4 851 227 A1**
(43) Date of publication of application: **09.12.2026**
(21) Application number: 25180995.0
(22) Date of filing: 05.06.2025
(51) Int. Cl.: C08G 77/16, C08K 3/36, C08K 5/23, C08K 5/5415, C08K 5/5419, C08K 5/544, C08K 5/5455, C08K 5/57, C09D 183/04, C09J 183/04

(54) **DEBONDABLE MOISTURE CURABLE COMPOSITION**

(71) Applicant: Henkel AG & Co. KGaA, 40589 Düsseldorf (DE)
(72) Inventor: Schaefer, Sascha, 40822 Mettmann (DE); Renken, Raul, 40229 Düsseldorf (DE); Hochheim, Theresia, 53757 Sankt Augustin (DE)

(57) **Abstract**

The present invention relates to a debondable moisture curable composition, a cured product of said composition, use of said debondable moisture curable composition as an adhesive, sealing, or coating material. The present invention further relates to a bonded structure comprising said composition and a method of debonding said bonded structure.

## Description

The present invention relates to a debondable moisture curable composition, a cured product of said composition, use of said debondable moisture curable composition as an adhesive, sealing, or coating material. The present invention further relates to a bonded structure comprising said composition and a method of debonding said bonded structure. The debondable adhesive or sealant is particularly suitable for recycling substrates in a circular economy.

Silicone- or SMP (silane-modified polymer)-based adhesives and sealants are widely used for joining of different substrates. For recycling of materials, it is desired to be able to detach adhesively bonded joints to separate the components into their single parts without damaging them. Such non-destructive debonding is useful for reworking misplaced components during production, but also for recycling the components and (re)using them.

It is a prerequisite that the joint needs to hold under the specific conditions of use and does not detach accidently. The debonding step must only be able to be performed in a controlled way accurately at the time desired by the user.

Besides, the boundary condition for detaching an adhesively bonded joint must be viable in practice and must comply with health, safety, and environmental regulations.

Ideally, the adhesive should be able to be easily removed from the components, so they can be used again without complex treatment steps.

In general, adhesive joints are detached by applying a trigger which leads to the weakening of the adhesive network leading to adhesive or cohesive failure of the joint. Several triggers of e.g. thermal, electrical, chemical, ultrasonic nature are well-known.

One general method of debonding is to cause the adhesive to fail through external action. This can be done chemically by applying solutions or pastes containing active substances that break the bond between adhesive and substrate. In addition, the adhesive can also be removed by mechanical action and the use of tools. A combination of both approaches is often chosen, in which the adhesive bond is treated with active solutions, heated to high temperatures and subjected to mechanical stress at the same time.

Another general method of debonding is the use of adhesive formulations containing active substances that significantly reduce bonding strength in response to an external trigger. Such active substances can be present in the polymer backbone itself or added as crosslinkers, fillers, primers or other additives. US 2023/0407153 A1 discloses debondable polyurethane adhesives based on thermally expandable microspheres. The use of expandable microspheres is particularly popular. These are added to the adhesive formulation and are inactive for the life of the adhesive bond. Upon heating, a strong increase in the volume of the microspheres can be achieved, which reduces the contact between adhesive and substrate and at the same time worsens the mechanical properties of the adhesive.

Another similar approach is to use polymer nanocapsules that release gas through a thermal stimulus. Gas bubbles are formed inside the adhesive layer, which favors cohesive failure. At the same time, the formation of gas bubbles at the interphase leads to poorer contact between adhesive and substrate and therefore favors adhesive failure.

Another approach is the use of polymers or crosslinkers that can be destroyed by an external trigger and thus dissolve the polymer network of the adhesive. This can be achieved, for example, by using thermally labile groups like carbonates or sulfonate esters which are cleaved at elevated temperatures.

WO 2020/213641 A1 discloses an optically reversible adhesive containing azobenzene moieties. CN115960103 A discloses an optically debondable adhesive using conjugated ketene units. When using optically active groups such as azobenzenes or conjugated ketenes, light is used as a trigger.

Another approach is to use two different curing systems in one adhesive formulation. CN 118556088 A discloses thermally debondable adhesives using a two-stage curing system. For example, the adhesive is cured via the radical polymerization of acrylates, while a second system, such as protected isocyanates, initially remains uncrosslinked. To debond the joint, the isocyanate can then be thermally deprotected allowing the system to crosslink further, making the adhesive brittle and easier to remove.

Some processes require multi-step treatment where the object to be cleaned is soaked in different solutions and requires a sophisticated setup of a cascade of bathes. US 2024/0076586 A1 discloses a remover reagent for a cured silicone sealant prepared from an acid catalyst and a solvent. The cured silicone sealant is first soaked with the remover reagent for 30 to 120 min, and then baked at a high temperature of 80 to 120 °C for 10 min or above into debris or powder, whereby the cured silicone sealant with a thickness of 10 mm or above can be removed.

A quite simple process is the thermal degradation of the silicone sealant. However, this requires temperatures higher than 300°C. Apart from the high energy needed for the degradation, it can be only used for heat-stable materials and applications.

Although several ways to remove adhesives and sealants have been known, there is still a need for providing more efficient debondable adhesives and sealants.

It was therefore the object of the present invention to provide effective debondable adhesives or sealants.

The present invention has achieved said objects by providing a debondable moisture curable composition comprising a special crosslinker. The composition according to the invention enables a simple and efficient removal of cured composition such as adhesives or sealants from substrate(s) and avoids use of dangerous, harmful and/or hazardous materials. In addition, the invention does not require any special reactor design or equipment for removal of adhesives and sealants.

The debondable moisture curable composition according to the invention combines the advantages of known thermally cleavable crosslinkers and the use of expanding or gas-releasing microcapsules. Upon heating, said crosslinker (component (B) of the composition according to the invention) is cleaved, which leads to the decomposition of the polymer network and thus to a softening of the adhesive. In addition, the decomposition of the crosslinker(s) is accompanied by the vigorous release of gas. The combination of these two effects causes the adhesive layer to form a foam, which leads to a significant reduction in its mechanical properties. By using said crosslinker(s), a drastic reduction in adhesive strength can be achieved without the need for additives such as microcapsules, as the crosslinker is part of the polymer network itself.

In addition, the decomposition of the crosslinker(s) takes place within a few minutes, which is advantageous in terms of both process time and energy consumption.

Moreover, adhesive failure on one side of the joint can be achieved by selectively heating the respective side and it is not limited to special substrates.

Furthermore, the debondable moisture curable composition comprising said crosslinker (component (B) having the general formula (1)) shows good mechanical properties such as high tensile strength, elongation at break, and lap shear strength.

In a first aspect, the present invention therefore relates to a debondable moisture curable composition.

A "moisture curable composition" is understood to be a substance or mixture of multiple substances, which is curable by upon exposure to moisture.

Provided reference is made to molecular weights of oligomers or polymers in the present application, the quantities, unless otherwise stated, refer to the weight average, i.e., the M_{w} value, and not to the number average molecular weight. The molecular weight is determined by gel permeation chromatography (GPC) with tetrahydrofuran (THF) as the eluent according to DIN 55672-1:2007-08, preferably at 35°C. Molecular weights of monomeric compounds are calculated based on the respective molecular formula and the known molecular weights of the individual atoms.

"At least one," as used herein, refers to 1 or more, i.e., 1, 2, 3, 4, 5, 6, 7, 8, 9, or more. In regard to an ingredient, the term relates to the type of ingredient and not to the absolute number of molecules. "At least one polymer" thus means, for example, at least one type of polymer, i.e., that a type of polymer or a mixture of a number of different polymers can be used. Together with weight data, the term refers to all compounds of the given type, contained in the composition/mixture, i.e., that the composition contains no other compounds of this type beyond the given amount of the relevant compounds.

All percentage data, provided in connection with the compositions described herein, refer to % by weight, based in each case on the relevant mixture, unless explicitly indicated otherwise.

"Alkyl," as used herein, refers to a saturated aliphatic hydrocarbon including straight-chain and branched-chain groups. The alkyl group preferably has 1 to 10 carbon atoms (if a numerical range, e.g., "1-10" is given herein, this means that this group, in this case the alkyl group, can have 1 carbon atom, 2 carbon atoms, 3 carbon atoms, etc., up to and including 10 carbon atoms). In particular, the alkyl can be an intermediate alkyl, which has 5 to 6 carbon atoms, or a lower alkyl, which has 1 to 4 carbon atoms, e.g., methyl, ethyl, n-propyl, isopropyl, butyl, isobutyl, tert-butyl, etc. The alkyl groups can be substituted or unsubstituted. "Substituted," as used in this connection, means that one or more carbon atoms and/or hydrogen atom(s) of the alkyl group are replaced by heteroatoms or functional groups. Functional groups that can replace the hydrogen atoms are selected particularly from =O, =S, -OH, -SH, -NH₂ -NO₂, -CN, -F, -Cl, -Br, -I, -COOH, -CONH₂, -OCN, -NCO, C₃₋₈ cycloalkyl, C₆₋₁₄ aryl, a 5-10-membered heteroaryl ring, in which 1 to 4 ring atoms independently are nitrogen, oxygen, or sulfur, and a 5-10-membered heteroalicyclic ring, in which 1 to 3 ring atoms are independently nitrogen, oxygen, or sulfur. Substituted alkyl includes, for example, alkylaryl groups. Heteroalkyl groups in which 1 or more carbon atoms are replaced by heteroatoms, particularly selected from O, S, N, or Si, are obtained by the replacement of one or more carbon atoms by heteroatoms. Examples of such heteroalkyl groups are, without limitation, methoxymethyl, ethoxyethyl, propoxypropyl, methoxyethyl, isopentoxypropyl, ethylaminoethyl, trimethoxypropylsilyl, etc.

"Alkenyl," as used herein, refers to an alkyl group, as defined herein, which consists of at least two carbon atoms and at least one carbon-carbon double bond, e.g., ethenyl, propenyl, butenyl, or pentenyl and structural isomers thereof such as 1- or 2-propenyl, 1-, 2-, or 3-butenyl, etc. Alkenyl groups can be substituted or unsubstituted. If they are substituted, the substituents are as defined above for alkyl.

"Alkenyloxy" refers to an alkenyl group, as defined herein, that is linked via an -O- to the rest of the molecule. The respective term thus includes enoxy groups, such as vinyloxy (H₂C=CH-O-).

"Alkynyl," as used herein, refers to an alkyl group, as defined herein, which consists of at least two carbon atoms and at least one carbon-carbon triple bond, e.g., ethynyl (acetylene), propynyl, butynyl, or petynyl and structural isomers thereof as described above. Alkynyl groups can be substituted or unsubstituted. If they are substituted, the substituents are as defined above for alkyl. "Alkylnyloxy" refers to an alkynyl group, as defined herein, that is linked via an -O- to the rest of the molecule.

A "cycloaliphatic group" or "cycloalkyl group," as used herein, refers to monocyclic or polycyclic groups (a number of rings with carbon atoms in common), particularly of 3-8 carbon atoms, in which the ring does not have a completely conjugated pi-electron system, e.g., cyclopropyl, cyclobutyl, cyclopentyl, cyclohexyl, cyclobutenyl, cyclopentenyl, cyclohexenyl, etc. Cycloalkyl groups can be substituted or unsubstituted. "Substituted," as used in this regard, means that one or more hydrogen atoms of the cycloalkyl group are replaced by functional groups. Functional groups that can replace the hydrogen atoms are selected particularly from =O, =S, -OH, -SH, -NH₂, -NO₂, -CN, -F, -Cl, -Br, -I, -COOH, -CONH₂, -OCN, -NCO, C₁₋₁₀ alkyl, C₂₋₁₀ alkenyl, C₂₋₁₀ alkynyl, C₃₋₈ cycloalkyl, C₆₋₁₄ aryl, a 5-10-membered heteroaryl ring, in which 1 to 4 ring atoms independently are nitrogen, oxygen, or sulfur, and a 5-10-membered heteroalicyclic ring, in which 1 to 3 ring atoms independently are nitrogen, oxygen, or sulfur. "Cycloalkyloxy" refers to a cycloalkyl group, as defined herein, that is linked via an -O- to the rest of the molecule.

"Aryl," as used herein, refers to monocyclic or polycyclic groups (i.e., rings that have neighboring carbon atoms in common), particularly of 6 to 14 carbon ring atoms which have a completely conjugated pi-electron system. Examples of aryl groups are phenyl, naphthalenyl, and anthracenyl. Aryl groups can be substituted or unsubstituted. If they are substituted, the substituents are as defined above for cycloalkyl. "Aryloxy" refers to an aryl group, as defined herein, that is linked via an -O- to the rest of the molecule.

A "heteroaryl" group, as used herein, refers to a monocyclic or polycyclic (i.e., rings that share an adjacent ring atom pair) aromatic ring, having particularly 5 to 10 ring atoms, wherein one, two, three, or four ring atoms are nitrogen, oxygen, or sulfur and the rest is carbon. Examples of heteroaryl groups are pyridyl, pyrrolyl, furyl, thienyl, imidazolyl, oxazolyl, isoxazolyl, thiazolyl, isothiazolyl, pyrazolyl, 1,2,3-triazolyl, 1,2,4-triazolyl, 1,2,3-oxadiazolyl, 1,2,4-oxadiazolyl, 1,2,5-oxadiazolyl, 1,3,4-oxadiazolyl, 1,3,4-triazinyl, 1,2,3-triazinyl, benzofuryl, isobenzofuryl, benzothienyl, benzotriazolyl, isobenzothienyl, indolyl, isoindolyl, 3H-indolyl, benzimidazolyl, benzothiazolyl, benzoxazolyl, quinolizinyl, quinazolinyl, phthalazinyl, quinoxalinyl, cinnolinyl, naphthyridinyl, quinolyl, isoquinolyl, tetrazolyl, 5,6,7,8-tetrahydroquinolyl, 5,6,7,8-tetrahydroisoquinolyl, purinyl, pteridinyl, pyridinyl, pyrimidinyl, carbazolyl, xanthenyl, or benzoquinolyl. Heteroaryl groups can be substituted or unsubstituted. If they are substituted, the substituents are as defined above for cycloalkyl. "(Hetero)aryl", as used herein, refers to both aryl and heteroaryl groups as defined herein. "Heteroaryloxy" refers to a heteroaryl group, as defined herein, that is linked via an -O- to the rest of the molecule.

A "heteroalicyclic group" or a "heterocycloalkyl group," as used herein, refers to a monocyclic or fused ring having 5 to 10 ring atoms, which contains one, two, or three heteroatoms, selected from N, O, or S, whereby the rest of the ring atoms are carbon. A "heterocycloalkenyl" group contains in addition one or more double bonds. The ring however has no completely conjugated pi-electron system. Examples of heteroalicyclic groups are pyrrolidinone, piperidine, piperazine, morpholine, imidazolidine, tetrahydropyridazine, tetrahydrofuran, thiomorpholine, tetrahydropyridine, and the like. Heterocycloalkyl groups can be substituted or unsubstituted. If they are substituted, the substituents are as defined above for cycloalkyl. "Heteroalicyclic" refers to a heteroalicyclic group, as defined herein, that is linked via an -O- to the rest of the molecule.

The present invention provides a debondable moisture curable composition comprising
(A) at least one silane-modified polymer and/or at least one organopolysiloxane polymer;
(B) at least one crosslinker having the general formula (1), 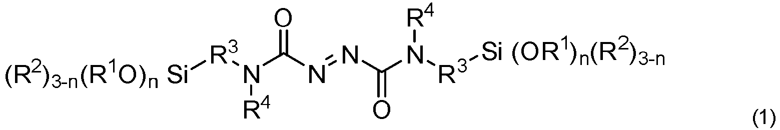 wherein
   R¹ is independently selected from an optionally substituted hydrocarbon radical, preferably an alkyl group preferably having 1 to 18 carbon atoms, or a carboxylic ester group, preferably acetate or methyl lactate;
   R² is independently selected from an optionally substituted hydrocarbon radical, preferably an alkyl group preferably having 1 to 18 carbon atoms, a cycloalkyl group preferably having 5 to 18 carbon atoms, or an aryl group preferably having 6 to 18 carbon atoms;
   R³ is selected from a branched or unbranched, and saturated or unsaturated, aliphatic, aromatic or mixed aliphatic/aromatic hydrocarbon radical which is optionally substituted with at least one functional group, preferably an alkylene radical having 1 to 30 carbon atoms;
   R⁴ is selected from hydrogen, an optionally substituted hydrocarbon radical, preferably an alkyl group preferably having 1 to 10 carbon atoms, a cycloalkyl group preferably having 5 to 18 carbon atoms, or an aryl group preferably having 6 to 18 carbon atoms; and
   n is 1, 2 or 3; and
(C) at least one curing catalyst.

### Component (A)

The debondable moisture curable composition according to the invention comprises as component (A) at least one silane-modified polymer and/or at least one organopolysiloxane polymer.

### silane-modified polymer

The silane-modified polymer has at least one silane-functional group, preferably at least two silane-functional group bound to a polymer backbone. The silane-functional group can be a lateral group within the polymer chain of the silane-modified polymer or a terminal group of the silane-modified polymer. In preferred embodiments, the silane-functional group is a terminal group of the silane-modified polymer. In preferred embodiments, the silane-modified polymer has at least two silane-functional groups in each polymer chain. In this case, the silane-modified polymer can have at least one lateral silane-functional group and at least one terminal silane-functional group; or, at least two lateral silane-functional groups; or, at least two terminal silane-functional groups.

In particularly preferred embodiments, the silane-modified polymer has at least two terminal silane-functional groups in each polymer chain. Then, each polymer chain comprises at least two linking points at which the condensation of the polymers can be completed, splitting off the hydrolyzed residues in the presence of atmospheric moisture. In this way, regular and rapid crosslinkability is achieved so that bonds with good strengths can be obtained. In addition, by means of the quantity and the structure of the hydrolyzable groups - for example by using di- or trialkoxysilyl groups, methoxy groups or longer residues - the configuration of the network that can be achieved as a long-chain system (thermoplastics), relatively wide-mesh three-dimensional network (elastomers) or highly crosslinked system (thermosets) can be controlled, so that *inter alia* the elasticity, flexibility and heat resistance of the finished crosslinked compositions can be influenced in this way.

In preferred embodiments, the polymer backbone of the silane-modified polymer is selected from polyethers, poly(meth)acrylic acid ester, polyesters, polyurethanes, poly-α-olefins, more preferably polyethers or polyurethanes, or copolymers of at least two of said polymers such as polyether and poly(meth)acrylic acid ester copolymers.

A "polyether", "polyoxyalkylene", or "polyalkylene glycol", as used interchangeably herein, is understood to be a polymer in which the organic repeating units comprise ether functionalities C-O-C in the main chain. Examples for such polymers are polypropylene glycol and polyethylene glycol and copolymers thereof.

A "poly(meth)acrylic acid ester" is understood to be a polymer based on (meth)acrylic acid esters, which therefore has as a repeating unit the structural motif -CH₂-CR'(COOR")-, where R' denotes a hydrogen atom (acrylic acid ester) or a methyl group (methacrylic acid ester) and R" denotes linear alkyl residues, branched alkyl residues, cyclic alkyl residues and/or alkyl residues comprising functional substituents, for example methyl, ethyl, isopropyl, cyclohexyl, 2-ethylhexyl or 2-hydroxyethyl residues.

A "polyurethane" is understood to be a polymer which has at least two urethane groups -NH-CO-O- in the main chain.

In particularly preferred embodiments, the silane-modified polymer has a polyether backbone. Polyethers have a flexible and elastic structure, with which compositions having excellent elastic properties can be produced. Polyethers are not only flexible in their backbone, but at the same time strong. Thus, for example, polyethers are not attacked or decomposed by water and bacteria, in contrast to, e.g., polyesters, for example.

According to a particularly preferred embodiments, the at least one silane-modified polymer has the general formula (2)

Y-[Xₒ-R-Si(R^{a})ₖ(R^{b})₃₋ₖ]ₚ (2),

wherein
X is a divalent linking group containing at least one heteroatom;
Y denotes an x-valent polymer radical bonded via nitrogen, oxygen, sulfur, or carbon;
R is selected from a divalent hydrocarbon residue having 1 to 12 carbon atoms;
each R^{a} is, independently of one another, selected from a hydrocarbon residue containing 1 to 20 carbon atoms and each R^{b} is, independently of one another, selected from a hydroxyl group or a hydrolysable group, wherein R^{a} and R^{b}are substituents directly bound with the Si atom or the two of the substituents R^{a} and R^{b} form a ring together with the Si atom to which they are bound;
k is 0, 1, or 2;
o is 0 or 1; and
p is an integer from 1 to 10.

In this context, the divalent bonding group (linking group) X comprising at least one heteroatom is understood to be a divalent chemical group which links the polymer backbone of the silane-modified polymer with the residue R of the general formula (2).

In various embodiments, the divalent linking group X in the general formula (2) is selected from -O-, -S-, -N(R")-, -R"'-O-, a substituted or unsubstituted amide, carbamate, urethane, urea, imino, carboxylate, carbamoyl, amidino, carbonate, sulfonate or sulfinate group, wherein R" is a hydrogen or a linear or branched and substituted or unsubstituted hydrocarbon residue having 1 to 12 carbon atoms; and R‴ is a linear or branched and substituted or unsubstituted hydrocarbon residue having 1 to 12 carbon atoms. The term "substituted" in relation to these groups means that a hydrogen atom present in these groups may be replaced by a non-hydrogen moiety, such as alkyl or aryl groups, preferably C₁₋₁₂ alkyl or C₆₋₁₄ aryl groups.

In preferred embodiments, the linking group X is urethane or urea group, more preferably urethane group. Urethane group can be formed, for example, either when the polymer backbone comprises terminal hydroxy groups and isocyanatosilanes are used as a further component, or conversely when a polymer having terminal isocyanate groups is reacted with an alkoxysilane comprising terminal hydroxy groups. Similarly, urea group can be obtained if a terminal primary or secondary amino group - either on the silane or on the polymer - is used, which reacts with a terminal isocyanate group that is present in the respective reactant. This means that either an aminosilane is reacted with a polymer having terminal isocyanate groups or a polymer that is terminally substituted with an amino group is reacted with an isocyanatosilane. Urethane and urea groups advantageously increase the strength of the polymer chains and of the overall crosslinked polymer.

In preferred embodiments, the linking group X is selected from the group consisting of -O-C(=O)-N(R")-, -N(R")-C(=O)O-, -N(R")-C(=O)-N(R")-, -N(R")-C(=O)-, -C(=O)-N(R")-, -C(=O)-O-, -O-C(=O)-, -O-C(=O)-O-, -S-C(=O)-N(R")-, -N(R")-C(=O)-S- , -C(=O)-S-, -S-C(=O)-, -S-C(=O)-S- , -C(=O)-, -S-, -O-, - NR"-, and -R"'-O-, wherein R" and R‴ are as defined above. In more preferred embodiments, the linking group X is selected from -O-C(=O)-N(R")-, -N(R")-C(=O)O- , -N(R")-C(=O)-N(R")-, -S-, -O-, -N(R")-, or -R"'-O-, wherein R" and R‴ are as defined above. In particularly preferred embodiments, the linking group X is selected from -O-C(=O)-N(R")-, -N(R")-C(=O)-N(R")-, -O-, or -R"'-O-, wherein R" and R‴ are as defined above, more preferably -O-C(=O)-NH- or -NH-C(=O)-NH-, most preferably -O-C(=O)-NH-.

The index "o" corresponds to 0 (zero) or 1, i.e., the linking group X links the polymer backbone with the residue R (o = 1) or the polymer backbone is bound or linked directly with the residue R (o = 0). In preferred embodiments, o is 1.

In preferred embodiments, Y is selected from polyethers, poly(meth)acrylic acid ester, polyesters, polyurethanes, poly-α-olefins, more preferably polyethers or polyurethanes, or copolymers of at least two of said polymers such as polyether and poly(meth)acrylic acid ester copolymers

The residue R is a divalent hydrocarbon residue having 1 to 12 carbon atoms. The hydrocarbon residue can be a linear, branched or cyclic alkylene residue and can be substituted or unsubstituted. The hydrocarbon residue can be saturated or unsaturated. In preferred embodiments, R is a divalent hydrocarbon residue having 1 to 6 carbon atoms. The curing rate of the composition can be influenced by the length of the hydrocarbon residues which form one of the binding links or the binding link between polymer backbone and silyl residue. Particularly preferably, R is a methylene, ethylene or n-propylene, in particular a methylene or n-propylene.

Alkoxysilane-functional compounds having a methylene group as binding link to the polymer backbone - so-called "alpha-silanes" - have a particularly high reactivity of the silyl group.

In general, a lengthening of the binding hydrocarbon chain leads to reduced reactivity of the polymers. In particular, "gamma-silanes" - which comprise the unbranched propylene residue as binding link - have a balanced ratio between necessary reactivity (acceptable curing times) and delayed curing (open assembly time, possibility of corrections after bonding).

R^{a} and R^{b} are substituents directly bound with the Si atom or the two of the substituents R^{a} and R^{b} can form a ring together with the Si atom to which they are bound. In preferred embodiments, R^{a} and R^{b} are the substituents directly bound with the Si atom.

Each R^{a} in the general formula (2) is, independently of one another, selected from a hydrocarbon radical containing 1 to 20 carbon atoms, preferably C₁ to C₈ alkyl groups, more preferably a methyl or an ethyl.

Each R^{b} in the general formula (2) is, independently of one another, selected from a hydroxyl group or a hydrolysable group, preferably C₁ to C₈ alkoxy groups or C₁ to C₈ acyloxy groups.

In preferred embodiments, Each R^{b} is, independently of one another, selected from C₁ to C₈ alkoxy groups, in particular methoxy, ethoxy, i-propyloxy or i-butyloxy group. When k is 0 or 1, combinations of more than one group are also possible.

In preferred embodiments, k is 0 or 1.

In particularly preferable embodiments, the silyl group, i.e., -Si(R^{a})ₖ(R^{b})₃₋ₖ, is selected from alkyldialkoxysilyl or trialkoxysilyl, preferably selected from methyldimethoxysilyl, ethyldiethoxysilyl, trimethoxysilyl, or triethoxysilyl, most preferably methyldimethoxysilyl or trimethoxysilyl. Alkoxy groups are advantageous, since no substances which irritate mucous membranes are released during the curing of compositions comprising alkoxy groups. The alcohols formed by hydrolysis of the residues are harmless in the quantities released, and evaporate.

In general, polymers comprising di- or trialkoxysilyl groups have highly reactive linking points which permit rapid curing, high degrees of crosslinking and thus good final strengths. The particular advantage of dialkoxysilyl groups lies in the fact that, after curing, the corresponding compositions are more elastic, softer and more flexible than systems comprising trialkoxysilyl groups. They are therefore suitable in particular for use as sealants. In addition, they split off even less alcohol during curing and are therefore of particular interest when the quantity of alcohol released is to be reduced.

With trialkoxysilyl groups, on the other hand, a higher degree of crosslinking can be achieved, which is particularly advantageous if a harder, stronger material is desired after curing. In addition, trialkoxysilyl groups are more reactive and therefore crosslink more rapidly, thus reducing the quantity of catalyst required, and they have advantages in "cold flow" - the dimensional stability of a corresponding adhesive under the influence of force and possibly temperature.

Methoxy and ethoxy groups as comparatively small hydrolyzable groups with low steric bulk are very reactive and thus permit a rapid cure, even with low use of catalyst. They are therefore of particular interest for systems in which rapid curing is desirable, such as for example in adhesives with which high initial adhesion is required.

Interesting configuration possibilities are also opened up by combinations of the two groups. If, for example, methoxy is selected for one of the R^{b} and ethoxy for the other R^{b} within the same alkoxysilyl group, the desired reactivity of the silyl groups can be adjusted particularly finely if silyl groups carrying exclusively methoxy groups are deemed too reactive and silyl groups carrying ethoxy groups not reactive enough for the intended use.

In addition to methoxy and ethoxy groups, it is of course also possible to use larger residues as hydrolyzable groups, which by nature exhibit lower reactivity. This is of particular interest if delayed curing is also to be achieved by means of the configuration of the alkoxy groups.

In the general formula (2), p is an integer from 1 to 10, preferably 1, 2 or 3, especially preferably 1 or 2.

In the general formula (2), -[Xₒ-R-Si(R^{a})ₖ(R^{b})₃₋ₖ]ₚ, can be a lateral group within the polymer chain or a terminal group of the polymer. In preferred embodiments, the silane-functional group of -[Xₒ-R-Si(R^{a})ₖ(R^{b})₃₋ₖ]ₚ is a terminal group of the silane-modified polymer. In preferred embodiments, the silane-modified polymer has at least two silane-functional groups of -[Xₒ-R-Si(R^{a})ₖ(R^{b})₃₋ₖ]ₚ. In this case, the silane-modified polymer can have at least one lateral silane-functional group and at least one terminal silane-functional group; or, at least two lateral silane-functional groups; or, at least two terminal silane-functional groups. In particularly preferred embodiments, the silane-modified polymer has at least two terminal silane-functional groups of -[Xₒ-R-Si(R^{a})ₖ(R^{b})₃₋ₖ]ₚ.

In a preferred embodiment, the silane-modified polymer having at least one silane-functional group can be obtained by reacting at least one polyol and at least one isocyanatosilane. If necessary, the polyol(s) can be first reacted with at least one polyisocyanate for chain extension.

In another preferred embodiment, the silane-modified polymer having at least one silane-functional group can be obtained by reacting at least one polyol with a stoichiometric excess of at least one polyisocyanate; and reacting the obtained NCO-terminated polyurethane prepolymer with at least one aminosilane, such as 3-aminopropyltrimethoxysilane.

A "polyol" is understood to be a compound which contains at least two OH groups, irrespective or whether the compound contains other functional groups. However, a polyol used in accordance with the present invention preferably contains only OH groups as functional groups or, if other functional groups are present, none of these other functional groups is reactive at least to isocyanates under the conditions prevailing during the reaction of the polyol(s) and isocyanatosilane(s) or polyisocyante(s).

The polyols suitable for preparing said silane-modified polymer are preferably polyether polyol. The above descriptions about the molecular weight and polydispersity of the polyether apply to the polyether polyol. The polyether polyol is preferably a polyalkylene oxide, particularly preferably polyethylene oxide and/or polypropylene oxide. In preferred embodiments, a polyether or a mixture of two polyethers are used.

The polyols to be used in accordance with the invention have an OH value of preferably about 1 to about 250.

The number average molecular weight Mₙ of the polyether on which the polymer is based is for preference 500 to 100,000 g/mol (daltons), more preferably 500 to 50,000, particularly preferably 1,000 to 30,000 and in particular 2,000 to 20,000 g/mol, most preferably 8,000 to 20,000 g/mol. Number average molecular weights of at least 500 g/mol are advantageous for the polyethers of the present invention since the corresponding compositions have a balanced ratio of viscosity (ease of processing), strength and elasticity.

Particularly advantageous viscoelastic properties can be achieved if polyethers having a narrow molecular weight distribution, and thus low polydispersity, are used. These can be produced, for example, by so-called double metal cyanide catalysis (DMC catalysis). Polyethers produced in this way are distinguished by a particularly narrow molecular weight distribution, by a high average molecular weight and by a very low number of double bonds at the ends of the polymer chains.

In a special embodiment of the present invention, the maximum polydispersity M_{w}/Mₙ of the polyether on which the polymer is based is therefore 2, particularly preferably 1.5 and most particularly preferably 1.3.

The ratio M_{w}/Mₙ (polydispersity) indicates the width of the molecular weight distribution and thus of the different degrees of polymerization of the individual chains in polydisperse polymers. For many polymers and polycondensates, a polydispersity value of about 2 applies. Strict monodispersity would exist at a value of 1. A low polydispersity of, for example, less than 1.5 indicates a comparatively narrow molecular weight distribution, and thus the specific expression of properties associated with molecular weight, such as e.g., viscosity. In particular, therefore, in the context of the present invention, the polyether on which the polymer C is based has a polydispersity (M_{w}/Mₙ) of less than 1.3.

Besides the polyethers, the polyol mixture may contain other polyols. For example, it may contain polyester polyols with a molecular weight of about 200 to about 30,000.

The isocyanatosilane used in the above reaction is understood to have the general formula of OCN-R-Si(R^{a})ₖ(R^{b})₃₋ₖ, wherein R, R^{a}, R^{b}, and k are as defined for the general formula (2).

A "polyisocyanate" is understood to be a compound which has at least two isocyanate groups -NCO. This compound does not have to be a polymer, and instead is frequently a low molecular compound.

The polyisocyanates suitable for preparing the polyurethane according to the invention include ethylene diisocyanate, 1,4-tetramethylene diisocyanate, 1,4-tetramethoxybutane diisocyanate, 1,6-hexamethylene diisocyanate (HDI), cyclobutane-1,3-diisocyanate, cyclohexane-1,3- and -1,4-diisocyanate, bis(2-isocyanatoethyl)fumarate, 1-isocyanato-3,3,5-trimethyl-5-isocyanatomethylcyclohexane (isophorone diisocyanate, IPDI), 2,4- and 2,6-hexahydrotoluylene diisocyanate, hexahydro-1,3- or -1 ,4-phenylene diisocyanate, benzidine diisocyanate, naphthalene-1,5-diisocyanate, 1,6-diisocyanato-2,2,4-trimethylhexane, 1,6-diisocyanato-2,4,4-trimethylhexane, xylylene diisocyanate (XDI), tetramethylxylylene diisocyanate (TMXDI), 1,3- and 1,4-phenylene diisocyanate, 2,4- or 2,6-toluylene diisocyanate (TDI), 2,4'-diphenylmethane diisocyanate, 2,2'-diphenylmethane diisocyanate, or 4,4'-diphenylmethane diisocyanate (MDI), and the isomeric mixtures thereof. Also suitable are partially or completely hydrogenated cycloalkyl derivatives of MDI, for example completely hydrogenated MDI (H₁₂-MDI), alkyl-substituted diphenylmethane diisocyanates, for example mono-, di-, tri-, or tetraalkyldiphenylmethane diisocyanate and the partially or completely hydrogenated cycloalkyl derivatives thereof, 4,4'-diisocyanatophenylperfluorethane, phthalic acid-bis-isocyanatoethyl ester, 1 chloromethylphenyl-2,4- or -2,6-diisocyanate, 1-bromomethylphenyl-2,4- or -2,6-diisocyanate, 3,3'-bis-chloromethyl ether-4,4'-diphenyl diisocyanate, sulfur-containing diisocyanates such as those obtainable by reacting 2 moles diisocyanate with 1 mole thiodiglycol or dihydroxydihexyl sulfide, diisocyanates of dimer fatty acids, or mixtures of two or more of the named diisocyanates. The polyisocyanate is preferably IPDI, TDI or MDI.

Other polyisocyanates suitable for use in accordance with the invention are isocyanates with a functionality of three or more obtainable, for example, by oligomerization of diisocyanates, more particularly by oligomerization of the isocyanates mentioned above. Examples of such tri- and higher isocyanates are the triisocyanurates of HDI or IPDI or mixtures thereof or mixed triisocyanurates thereof and polyphenyl methylene polyisocyanate obtainable by phosgenation of aniline/formaldehyde condensates.

### organopolysiloxane polymer

The organopolysiloxane polymer preferably has unit formula (3)

(R^{c}₃-xR^{d}xSiO_{1/2})_{M}(R^{c}_{2-y}R^{d}_{y}SiO_{2/2})_{D}(R^{c}_{1-z}R^{d}_{z}SiO_{3/2})_{T}(SiO_{4/2})_{Q} (3),

wherein each R^{c} is independently selected from the group consisting of substituted or unsubstituted hydrocarbyl groups, which may be optionally interrupted by at least one heteroatom, a hydroxy group, hydrogen, hydrolysable groups; each R^{d} is independently selected from aliphatically unsaturated groups; x has a value from 0 to 3, y has a value from 0 to 2, and z has a value from 0 to 1; subscripts M, D, T and Q represent mole fractions of each unit in the unit formula, and subscripts M, D, T, and Q have values such that preferably 0<M≤0.3, preferably 0.4≤D<1, preferably 0≤T≤0.2 and preferably 0≤Q≤0.3, with the proviso that M+D+T+Q=1.

Organopolysiloxane polymers generally comprise the monofunctional (M) siloxy units (i.e., the (R^{c}₃₋ₓR^{d}ₓSiO_{1/2}) siloxy units), difunctional (D) siloxy units (i.e., the (R^{c}_{2-y}R^{d}_{y}SiO_{2/2}) siloxy units), trifunctional (T) siloxy units (i.e., the (R^{c}_{1-z}R^{d}_{z}SiO_{3/2}) siloxy units), and quadrifunctional (Q) siloxy units (i.e., the (SiO_{4/2}) siloxy units). Although if the organopolysiloxane polymer includes at least one Q siloxy unit, the organopolysiloxane polymer is considered a silicone polymer by one of skill in the art, rather than a silicone resin, due to the degree of polymerization (DP) in the organopolysiloxane polymer and the molar fraction of Q siloxy units present therein.

The unit formula of the organopolysiloxane polymer is representative of the average formula of the M, D, T and Q siloxy units. For example, the M siloxy units may be independently selected within the formula (R^{c}₃₋ₓR^{d}ₓSiO_{1/2}), and the D siloxy units may be independently selected within the formula (R^{c}_{2-yR}^{d}_{y}SiO_{2/2}). The subscripts, or mole fractions of the M, D, T and Q siloxy units in the organopolysiloxane polymer, are collective based on all M siloxy units, all D siloxy units, all T siloxy units, and all Q siloxy units, respectively. By way of example, the organopolysiloxane polymer may include M units corresponding to (R^{c}₃SiO_{1/2}), (R^{c}_{2R}^{d}SiO_{1/2}), (R^{c}R^{d}₂SiO_{1/2}), and/or (R^{d}₃SiO_{1/2}), depending on whether subscript x is 0, 1, 2 or 3. Similarly, the organopolysiloxane polymer may include D units corresponding to (R^{c}₂SiO_{2/2}), (R^{c}R^{d}SiO_{2/2}), and/or (R^{d}₂SiO_{2/2}), depending on whether subscript y is 0, 1 or 2.Finally, the T units may be selected from the group consisting of (R^{c}₁SiO_{3/2}) and (R^{d}SiO_{3/2}) and a combination thereof in the organopolysiloxane polymer.

In formula (3), each R^{c} is independently selected from the group consisting of substituted or unsubstituted hydrocarbyl groups, which may be optionally interrupted by at least one heteroatom, a hydroxy group, hydrogen, hydrolysable groups. The hydrolysable groups are preferably selected from alkoxy groups, acetate groups, lactate groups, lactic acid groups, or oximino groups. Each R^{c} independently may be linear, branched, cyclic, or combinations thereof. Cyclic hydrocarbyl groups encompass aryl groups as well as saturated or non-conjugated cyclic groups. Aryl groups may be monocyclic or polycyclic. One example of a combination of a linear and cyclic hydrocarbyl group is an aralkyl group. By "substituted", it is meant that one or more hydrogen atoms may be replaced with atoms other than hydrogen (e.g., a halogen atom, such as chlorine, fluorine, or bromine) , or a carbon atom within the chain of R^{c} may be replaced with an atom other than carbon, i.e., R^{c} may include one or more heteroatoms within the chain, such as oxygen, sulfur, nitrogen, or phosphorus. Hydrocarbyl groups may be exemplified by methyl, ethyl, n-propyl, isopropyl, n-butyl, isobutyl, sec-butyl, t-butyl, pentyl, hexyl, cyclohexyl, heptyl, octyl, nonyl, decyl, or a similar alkyl group; phenyl, tolyl, xylyl, naphthyl, or a similar aryl group; a benzyl, phenethyl, or a similar aralkyl group; and 3-chloropropyl, 2-bromoethyl, 3, 3, 3-trifluoropropyl, or a similar substituted (e.g., halogenated) alkyl group. When R^{c} is not an aryl group, each R^{c} is typically saturated and not an alkenyl or alkynyl group. In preferred embodiments, each R^{c} may be independently selected from the group consisting of alkyl groups, aryl groups, a hydroxy group, hydrogen, and hydrolysable groups, more preferably, from the group consisting of alkyl groups, aryl groups, a hydroxy group, hydrogen, alkoxy groups, acetate groups, lactate groups, and oximino groups.

In more preferred embodiments, each R^{c} is independently selected from the group consisting of alkyl groups, aryl groups, a hydroxy group, hydrogen, alkoxy groups, lactate groups, and lactic acid groups, more preferably, from the group consisting of methyl, ethyl, n-propyl, isopropyl, n-butyl, sec-butyl, isobutyl, t-butyl, pentyl, hexyl, cyclohexyl, benzyl, phenyl, hydroxy, hydrogen, methoxy group, ethoxy group, n-propoxy group, isopropoxy group, n-butoxy group, isobutoxy group, sec-butoxy group, t-butoxy group, methyl lactate group, ethyl lactate group, and lactic acid.

In particularly preferred embodiments, each R^{c} is independently selected from the group consisting of methyl, ethyl, propyl, isopropyl, benzyl, phenyl, hydroxy, hydrogen, methoxy group, ethoxy group, n-propoxy group, isopropoxy group, and ethyl lactate group.

Each R^{d} is independently selected from aliphatically unsaturated groups, which may alternatively be referred to as ethylenic unsaturation. The ethylenic unsaturation in R^{d} may be terminal. Each R^{d} may be independently selected from the group consisting of an alkenyl group and an alkynyl group. "Alkenyl" means an acyclic, branched or unbranched, monovalent hydrocarbon group having one or more carbon-carbon double bonds. Alkenyl groups may have 2 to 30 carbon atoms, alternatively 2 to 24 carbon atoms, alternatively 2 to 20 carbon atoms, alternatively 2 to 12 carbon atoms, alternatively 2 to 10 carbon atoms, and alternatively 2 to 6 carbon atoms. Specific examples thereof include vinyl groups, allyl groups, and hexenyl groups. "Alkynyl" means an acyclic, branched or unbranched, monovalent hydrocarbon group having one or more carbon-carbon triple bonds. Alkynyl groups may have 2 to 30 carbon atoms, alternatively 2 to 24 carbon atoms, alternatively 2 to 20 carbon atoms, alternatively 2 to 12 carbon atoms, alternatively 2 to 10 carbon atoms, and alternatively 2 to 6 carbon atoms. Specific examples thereof include ethynyl, propynyl, and butynyl groups. Various examples of R² include CH₂=CH-, CH₂=CHCH₂-, CH₂=CH(CH₂)₄-, CH₂=C(CH₃)CH₂-H₂C=C(CH₃)-, H₂C=C(CH₃)-, H₂C=C(CH₃)CH₂-H₂C=CHCH₂CH₂-, H₂C=CHCH₂CH₂CH₂-, HC≡C-, HC≡CCH₂-, HC≡CCH(CH₃)-, HC≡CC(CH₃)₂-, and HC≡CC(CH₃)₂CH₂-. Alternatively, each R^{d} may be an alkenyl group. Alternatively, each R^{d} may be independently selected from the group consisting of vinyl, allyl, and hexenyl; alternatively vinyl and hexenyl. Preferably, each R² may be a vinyl group.

According to preferred embodiments, at least one of x, y, and z are 0, more preferably x, y, and z are 0.

The organopolysiloxane polymer may have one Q siloxy unit, per molecule. Alternatively, the organopolysiloxane polymer may have two Q siloxy units, alternatively three Q siloxy units, per molecule. The organopolysiloxane polymer may have a degree of polymerization (DP) of 5 to 400, alternatively from 10 to 200, alternatively from 14 to 160.

The organopolysiloxane polymer may have a viscosity at 25°C from greater than 0 mm²/s to less than 2,500,000 mm² /s, alternatively from greater than 0 mm²/s to less than 300,000 mm²/s, alternatively from greater than 0 mm²/s to less than 60,000 mm²/s. Preferably, the organopolysiloxane polymer may have a weight-average molecular weight molecular weight (M_{W}) of from greater than 0 to 400,000 g/mol, alternatively from 1,000 g/mol to 200,000 g/mol, alternatively from 1,500 g/mol to 100,000 g/mol. The viscosity of the organopolysiloxane polymer can be measured by BROOKFIELD viscometer. M_{W} of the organopolysiloxane polymer can be determined via gel permeation chromatography employing a light-scattering detector, a refractive index detector, and a viscosity detector while employing polystyrene standards.

Methods of preparing organopolysiloxane polymers are known in the art, for example, as described in U.S. Patent Application Publication 2002/0061998 to Cray, et al.

The component (A) may be one silane-modified polymer or organopolysiloxane polymer. Alternatively, the component (A) may be a combination of two or more different silane-modified polymers and/or organopolysiloxane polymers.

According to a preferred embodiment of the invention, the component (A) is organopolysiloxane polymer.

According to a preferred embodiment of the invention, the debondable moisture curable composition comprises the component (A) in an amount of 30 to 95% by weight, more preferably from 50 to 90% by weight, based on the total weight of the composition. If a mixture of a number of polymers of the component (A) is used, the quantitative data naturally relate to the total amount of the polymers in the composition.

### Component (B)

The debondable moisture curable composition according to the invention comprises as component (B) at least one crosslinker having the general formula (1) 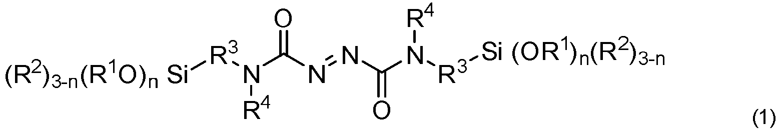 wherein
R¹ is independently selected from an optionally substituted hydrocarbon radical, preferably an alkyl group preferably having 1 to 18 carbon atoms, or a carboxylic ester group, preferably acetate or methyl lactate;
R² is independently selected from an optionally substituted hydrocarbon radical, preferably an alkyl group preferably having 1 to 18 carbon atoms, a cycloalkyl group preferably having 5 to 18 carbon atoms, or an aryl group preferably having 6 to 18 carbon atoms;
R³ is selected from a branched or unbranched, and saturated or unsaturated, aliphatic, aromatic or mixed aliphatic/aromatic hydrocarbon radical which is optionally substituted with at least one functional group, preferably an alkylene radical having 1 to 30 carbon atoms;
R⁴ is selected from hydrogen, an optionally substituted hydrocarbon radical, preferably an alkyl group preferably having 1 to 10 carbon atoms, a cycloalkyl group preferably having 5 to 18 carbon atoms, or an aryl group preferably having 6 to 18 carbon atoms; and n is 1, 2 or 3.

According to a preferred embodiment of the invention, R¹ is independently selected from an alkyl group having 1 to 10 carbon atoms, more preferably an alkyl group having 1 to 6 carbon atoms, in particular a methyl or ethyl group, or a carboxylic ester group, preferably acetate or methyl lactate. More preferably, R¹ is independently selected from a methyl or ethyl group.

According to a preferred embodiment of the invention, R² is independently selected from an alkyl group having 1 to 10 carbon atoms, more preferably an alkyl group having 1 to 6 carbon atoms, in particular a methyl group, a cycloalkyl group having 5 to 18 carbon atoms, or an aryl group having 6 to 18 carbon atoms, preferably a phenyl group. In particularly preferred embodiment, R² is a methyl or phenyl group.

According to a preferred embodiment of the invention, R³ is selected from a saturated or unsaturated alkylene radical having 1 to 30 carbon atoms, more preferably 1 to 20 carbon atoms, even more preferably 1 to 10 carbon atoms. More preferably, R³ is selected from an alkylene radical having 1 to 7 carbon atoms, in particular propylene.

According to a preferred embodiment of the invention, R⁴ is selected from hydrogen, an alkyl group having 1 to 10 carbon atoms, a cycloalkyl group having 5 to 18 carbon atoms, or an aryl group having 6 to 18 carbon atoms. More preferably, R⁴ is hydrogen.

According to a preferred embodiment of the invention, n is 2 or 3.

Said crosslinker combines the advantages of known thermally cleavable crosslinkers and the use of expanding or gas-releasing microcapsules. Upon heating, the crosslinker is cleaved, which leads to the decomposition of the polymer network and thus to a softening of the adhesive. In addition, the decomposition of the crosslinker(s) is accompanied by the vigorous release of gas. The combination of these two effects causes the adhesive layer to form a foam, which leads to a significant reduction in its mechanical properties. In this way, the tensile strength of the composition can be reduced by up to 90% and the tensile lap shear strength on glass substrates by up to 95%. Thus, by using said crosslinker(s), a drastic reduction in adhesive strength can be achieved without the need for additives such as microcapsules, as the crosslinker is part of the polymer network itself. In addition, the decomposition of the crosslinker(s) takes place within a few minutes, which is advantageous in terms of both process time and energy consumption.

According to a preferred embodiment, the debondable moisture curable composition comprises the component (B) preferably in an amount of from 5 to 50% by weight, more preferably from 10 to 30% by weight, based on the total weight of the composition.

### Component (C)

The curable composition according to the present invention comprises at least one curing catalyst as the component (C).

In preferred embodiments, the curing catalyst may be a tin compound, preferably an organotin compound or an inorganic tin salt. Tin in these tin compounds is preferably bivalent or tetravalent. Suitable inorganic tin salts are, for example, tin(II) chloride and tin(IV) chloride. Organotin compounds (tin organyles) are used preferably as the tin compounds, however. Suitable organotin compounds are, for example, the 1,3-dicarbonyl compounds of bivalent or tetravalent tin, for example, the acetylacetonates such as di(n-butyl)tin(IV) di(acetylacetonate), di(n-octyl)tin(IV) di(acetylacetonate), (n-octyl)(n-butyl)tin(IV) di(acetylacetonate); the dialkyl tin(IV) dicarboxylates, for example, di-n-butyltin dilaurate, di-n-butyltin maleate, di-n-butyltin diacetate, di-n-octyltin dilaurate, di-n-octyltin diacetate, or the corresponding dialkoxylates, for example, di-n-butyltin dimethoxide; oxides of tetravalent tin, for example, dialkyltin oxides, such as, for example, di-n-butyltin oxide and di-n-octyltin oxide; and the tin(II) carboxylates such as tin(II) octoate or tin(II) phenolate.

In preferred embodiments, the curing catalyst is selected from the group consisting of 1,3-dicarbonyl compounds of bivalent or tetravalent tin, dialkyltin(IV) dicarboxylates, dialkyltin(IV) dialkoxylates, dialkyltin(IV) oxides, tin(II) carboxylates, and mixtures thereof.

Suitable furthermore are tin compounds of ethyl silicate, dimethyl maleate, diethyl maleate, dioctyl maleate, dimethyl phthalate, diethyl phthalate, dioctyl phthalate, such as, for example, di(n-butyl)tin(IV) di(methyl maleate), di(n-butyl)tin(IV) di(butyl maleate), di(n-octyl)tin(IV) di(methyl maleate), di(n-octyl)tin(IV) di(butyl maleate), di(n-octyl)tin(IV) di(isooctyl maleate); and di(n-butyl)tin(IV) sulfide, (n-butyl)₂Sn(SCH₂COO), (n-octyl)₂Sn(SCH₂COO), (n-octyl)₂Sn(SCH₂CH₂COO), (n-octyl)₂Sn(SCH₂CH₂COOCH₂CH₂OCOCH₂S), (n-butyl)₂-Sn(SCH₂COO-i-CₛH₁₇)₂, (n-octyl)₂Sn(SCH₂COO-i-CₛH₁₇)₂, and (n-octyl)₂Sn(SCH₂COO-n-C₈H₁₇)₂.

Preferably, the tin compound is selected from the group consisting of 1,3-dicarbonyl compounds of bivalent or tetravalent tin, the dialkyltin(IV) dicarboxylates, the dialkyltin(IV) dialkoxylates, the dialkyltin(IV) oxides, the tin(II) carboxylates, and mixtures thereof.

Particularly preferably, the tin compound is a dialkyltin(IV) dicarboxylate, particularly di-n-butyltin dilaurate or di-n-octyltin dilaurate.

Additionally or alternatively, other metal-based condensation catalysts may be used, including, without limitation, compounds of titanium such as organotitanates or chelate complexes, cerium compounds, zirconium compounds, molybdenum compounds, manganese compounds, copper compounds, aluminum compounds, or zinc compounds or their salts, alkoxylates, chelate complexes, or catalytically active compounds of the main groups or salts of bismuth, lithium, strontium, or boron.

Further suitable (tin-free) curing catalysts are, for example, organometallic compounds of iron, particularly the 1,3-dicarbonyl compounds of iron such as, e.g., iron(III) acetylacetonate.

Boron halides such as boron trifluoride, boron trichloride, boron tribromide, boron triiodide, or mixtures of boron halides can also be used as curing catalysts. Particularly preferred are boron trifluoride complexes such as, e.g., boron trifluoride diethyl etherate, which as liquids are easier to handle than gaseous boron halides.

Further, amines, nitrogen heterocycles, and guanidine derivatives are suitable in general for catalysis. An especially suitable catalyst from this group is 1,8-diazabicyclo[5.4.0]undec-7-ene (DBU).

Titanium, aluminum, and zirconium compounds, or mixtures of one or more catalysts from one or more of the just mentioned groups may also be used as catalysts.

Suitable as titanium catalysts are compounds that have hydroxy groups and/or substituted or unsubstituted alkoxy groups, therefore titanium alkoxides of the general formula

Ti(OR^{z})₄,

wherein R^{z} is an organic group, preferably a substituted or unsubstituted hydrocarbon group having 1 to 20 C atoms, and the 4 alkoxy groups -OR^{z} are identical or different. Further, one or more of the -OR^{z} groups can be replaced by acyloxy groups -OCOR^{z}.

Likewise suitable as titanium catalysts are titanium alkoxides in which one or more alkoxy groups are replaced by a hydroxy group or halogen atoms.

Further, titanium chelate complexes can be used.

Aluminum catalysts can also be used as curing catalysts, e.g., aluminum alkoxides

Al(OR^{z})₃,

wherein R^{z} has the above meaning; i.e., it is an organic group, preferably a substituted or unsubstituted hydrocarbon group having 1 to 20 C atoms and the three R^{z} groups are identical or different. In the case of aluminum alkoxides as well, one or more of the alkoxy groups can be replaced by acyloxy groups - OC(O)R^{z}.

Further, aluminum alkoxides can be used in which one or more alkoxy groups are replaced by a hydroxy group or halogen atoms.

Of the described aluminum catalysts, the pure aluminum alcoholates are preferred in regard to their stability to moisture and the curability of the mixtures to which they are added. In addition, aluminum chelate complexes are preferred.

Suitable as zirconium catalysts are, e.g.: tetramethoxyzirconium or tetraethoxyzirconium.

Diisopropoxyzirconium bis(ethyl acetoacetate), triisopropoxyzirconium (ethyl acetoacetate), and isopropoxyzirconium tris(ethyl acetoacetate) are used with very particular preference.

Further, zirconium acylates can be used, for example.

Halogenated zirconium catalysts can also be used.

Further, zirconium chelate complexes can also be used.

In addition, carboxylic acid salts of metals or also a mixture of a number of such salts can be employed as curing catalysts, whereby these are selected from the carboxylates of the following metals: calcium, vanadium, iron, zinc, titanium, potassium, barium, manganese, nickel, cobalt, and/or zirconium.

Of the carboxylates, the calcium, vanadium, iron, zinc, titanium, potassium, barium, manganese, and zirconium carboxylates are preferred, because they exhibit a high activity. Calcium, vanadium, iron, zinc, titanium, and zirconium carboxylates are particularly preferred. Iron and titanium carboxylates are very particularly preferred.

According to a preferred embodiment, the at least one curing catalyst is selected from the group consisting of tin catalysts, titanium catalysts, aluminum catalysts, or zirconium catalysts, more preferably tin catalysts or titanium catalysts, or mixtures thereof.

According to a preferred embodiment, the debondable moisture curable composition comprises at least one curing catalyst in an amount of from 0.01 to 5.0% by weight, more preferably 0.05 to 1.0% by weight, based on the total weight of the composition. If a mixture of different catalysts is used, the amounts refer to the total amount in the composition.

### Decomposition accelerator

In addition to the curing catalyst, the debondable moisture curable composition according to the invention may comprise at least one decomposition accelerator. The decomposition accelerator facilitates a faster decomposition at lower temperatures.

Suitable decomposition accelerators are, for example, zinc(II) salts, preferably selected from zinc oxide or zinc stearate.

In preferred embodiments, the debondable moisture curable composition according to the invention may comprise at least one decomposition accelerator up to 30% by weight, more preferably up to 15% by weight, based on the total weight of the composition.

In preferred embodiments, the weight ratio between the crosslinker having the general formula (1) and the decomposition accelerator is from 1:0.1 to 1:2, more preferably from 1:0.25 to 1:0.75.

### Filler

The debondable moisture curable composition according to the invention may comprise at least one filler.

Suitable fillers are, for example, chalk, lime powder, precipitated and/or pyrogenic (fumed) silica, zeolites, bentonites, calcium carbonate, magnesium carbonate, diatomaceous earth, alumina, clay, tallow, titanium oxide, iron oxide, zinc oxide, zinc stearate, sand, quartz, flint, mica, glass powder, and other ground mineral substances. Organic fillers can also be used, such as, for example, carbon black, graphite, wood fibers, wood flour, sawdust, cellulose, cotton, pulp, cotton, wood chips, chopped straw, and chaff. Short fibers such as glass fibers, glass filament, polyacrylonitrile, carbon fibers, Kevlar fibers, or polyethylene fibers may also be added. Aluminum powder is also suitable as a filler.

According to a preferred embodiment of the invention, the at least one filler is selected from precipitated and/or pyrogenic (fumed) silica, calcium carbonate, zinc oxide, zinc stearate, alumina, and mixtures thereof.

According to a preferred embodiment of the invention, the debondable moisture curable composition comprises at least one filler in an amount of up to 60% by weight, particularly preferably up to 20% by weight, based on the total weight of the composition. If a mixture of a number of fillers is used, the quantitative data naturally refer to the total amount of filler in the composition.

### Further components

The debondable moisture curable composition according to the present invention can further comprise, apart from the above-described components, one or more components in the composition that can be used to selectively influence specific properties of the curable composition and/or the cured product.

These other components can be selected, for example, from the group consisting of plasticizers, adhesion promoters, stabilizers, bases, antioxidants, reactive diluents, drying agents, UV stabilizers, rheological aids, pigments and solvents. Of particular importance are typically plasticizers, adhesion promoters, bases, and stabilizers, comprising antioxidants and UV stabilizers.

It is conceivable that the viscosity of the composition is too high for certain applications. It can then be reduced in a simple and expedient way usually by using a reactive diluent in the composition, without any signs of demixing (e.g., plasticizer migration) occurring in the cured mass.

Preferably, the reactive diluent has at least one functional group which after application reacts, e.g., with moisture or atmospheric oxygen. Examples of groups of this type are silyl groups, isocyanate groups, vinylically unsaturated groups, and polyunsaturated systems.

All compounds that can be mixed with the other components with a reduction in viscosity and have at least one group reactive with the polymer can be used as reactive diluents.

The viscosity of the reactive diluent is preferably less than 20,000 mPas, particularly preferably about 0.1 to 6000 mPas, very particularly preferably 1 to 1000 mPas (Brookfield RVT, 23°C, spindle 7, 10 rpm).

The following substances, for example, can be used as reactive diluents: polyalkylene glycols reacted with isocyanatosilanes, carbamatopropyltrimethoxysilane, alkyltrimethoxysilane, alkyltriethoxysilane, such as methyltrimethoxysilane, methyltriethoxysilane, and vinyltrimethoxysilane, vinyltriethoxysilane, phenyltrimethoxysilane, phenyltriethoxysilane, octyltrimethoxysilane, tetraethoxysilane, vinyldimethoxymethylsilane, vinyltriethoxysilane, vinyltriacetoxysilane, isooctyltrimethoxysilane, isooctyltriethoxysilane, N-trimethoxysilylmethyl-O-methyl carbamate, N-dimethoxy(methyl)silylmethyl-O-methyl carbamate, hexadecyltrimethoxysilane, 3-octanoylthio-1-propyltriethoxysilane, and partial hydrolysates of said compounds.

Silane-modified polyethers which derive, e.g., from the reaction of isocyanatosilane with Synalox types can likewise be used.

Polymers that can be prepared from an organic framework by grafting with a vinylsilane or by reacting polyol, polyisocyanate, and alkoxysilane can be used, furthermore, as reactive diluents.

A polyol is understood to be a compound that may contain one or more OH groups in the molecule. The OH groups can be both primary and secondary.

Suitable aliphatic alcohols include, for example, ethylene glycol, propylene glycol, and higher glycols, as well as other polyfunctional alcohols. The polyols can contain in addition other functional groups such as. e.g., esters, carbonates, or amides.

To prepare the preferred reactive diluents, the corresponding polyol component is reacted in each case with an at least difunctional isocyanate. Any isocyanate having at least two isocyanate groups may basically be used as the at least difunctional isocyanate, but within the scope of the present invention, compounds with two to four isocyanate groups, particularly with two isocyanate groups, are generally preferred.

Preferably, the compound present as the reactive diluent has at least one alkoxysilyl group, whereby of the alkoxysilyl groups, the di- and trialkoxysilyl groups are preferred.

Suitable as polyisocyanates for the preparation of a reactive diluent are, for example, ethylene diisocyanate, 1,4-tetramethylene diisocyanate, 1,4-tetramethoxybutane diisocyanate, 1,6-hexamethylene diisocyanate (HDI), cyclobutane-1,3-diisocyanate, cyclohexane-1,3 and -1,4 diisocyanate, bis(2-isocyanatoethyl) fumarate, as well as mixtures of two or more thereof, 1-isocyanato-3,3,5-trimethyl-5-isocyanatomethyl cyclohexane (isophorone diisocyanate, IPDI), 2,4- and 2,6-hexahydrotoluylene diisocyanate, hexahydro-1,3- or -1,4-phenylene diisocyanate, benzidine diisocyanate, naphthalene-1,5-diisocyanate, 1,6-diisocyanato-2,2,4-trimethylhexane, 1,6-diisocyanato-2,4,4-trimethylhexane, xylylene diisocyanate (XDI), tetramethylxylylene diisocyanate (TMXDI), 1,3- and 1,4-phenylene diisocyanate, 2,4- or 2,6-toluylene diisocyanate (TDI), 2,4'-diphenylmethane diisocyanate, 2,2'-diphenylmethane diisocyanate, or 4,4'-diphenylmethane diisocyanate (MDI), or the partially or completely hydrogenated cycloalkyl derivatives thereof, for example, completely hydrogenated MDI (H12-MDI), alkyl-substituted diphenylmethane diisocyanates, for example, mono-, di-, tri-, or tetraalkyl diphenylmethane diisocyanate and the partially or completely hydrogenated cycloalkyl derivatives thereof, 4,4'-diisocyanatophenyl perfluoroethane, phthalic acid bis-isocyanatoethyl ester, 1-chloromethylphenyl-2,4- or -2,6-diisocyanate, 1-bromomethylphenyl-2,4- or - 2,6-diisocyanate, 3,3-bis-chloromethyl ether-4,4'-diphenyl diisocyanate, sulfur-containing diisocyanates, as can be obtained by reacting 2 mol of diisocyanate with 1 mol of thiodiglycol or dihydroxydihexyl sulfide, the di- and triisocyanates of dimer and trimer fatty acids, or mixtures of two or more of the aforesaid diisocyanates.

Trivalent or higher valent isocyanates, as can be obtained, for example, by oligomerization of diisocyanates, particularly by oligomerization of the aforesaid isocyanates, can also be used as polyisocyanates. Examples of such trivalent and higher-valent polyisocyanates are the triisocyanurates of HDI or IPDI or mixtures thereof or mixed triisocyanurates thereof, as well as polyphenylmethylene polyisocyanate, as can be obtained by phosgenation of aniline-formaldehyde condensation products.

Solvents and/or plasticizers can be used, in addition to or instead of a reactive diluent, for reducing the viscosity of the curable composition.

Suitable as solvents are aliphatic or aromatic hydrocarbons, halogenated hydrocarbons, ketones, ethers, esters, ester alcohols, keto alcohols, keto ethers, keto esters, and ether esters.

The composition described herein can furthermore contain hydrophilic plasticizers in the composition. These are used to improve the moisture absorption and thereby to improve the reactivity at low temperatures. Suitable as plasticizers are, for example, esters of abietic acid, adipic acid esters, azelaic acid esters, benzoic acid esters, butyric acid esters, acetic acid esters, esters of higher fatty acids having approximately 8 to approximately 44 carbon atoms, epoxidized fatty acids, fatty acid esters and fats, glycolic acid esters, phosphoric acid esters, phthalic acid esters, linear or branched alcohols containing 1 to 12 carbon atoms, propionic acid esters, sebacic acid esters, sulfonic acid esters, thiobutyric acid esters, trimellitic acid esters, citric acid esters, and esters based on nitrocellulose and polyvinyl acetate, as well as mixtures of two or more thereof.

For example, of the phthalic acid esters, dioctyl phthalate, dibutyl phthalate, diisoundecyl phthalate, or butylbenzyl phthalate is suitable, and of the adipates, dioctyl adipate, diisodecyl adipate, diisodecyl succinate, dibutyl sebacate, or butyl oleate.

Also suitable as plasticizers are the pure or mixed ethers of monofunctional, linear or branched C₄₋₁₆ alcohols or mixtures of two or more different ethers of such alcohols, for example, dioctyl ether.

Endcapped polyethylene glycols are also suitable as plasticizers, for example, polyethylene or polypropylene glycol di-C₁₋₄-alkyl ethers, particularly the dimethyl or diethyl ethers of diethylene glycol or dipropylene glycol, and mixtures of two or more thereof.

Suitable plasticizers are endcapped polyethylene glycols, such as polyethylene or polypropylene glycol dialkyl ethers, wherein the alkyl group has up to four C atoms, and particularly the dimethyl and diethyl ethers of diethylene glycol and dipropylene glycol. An acceptable curing is achieved in particular with dimethyldiethylene glycol also under less favorable application conditions (low humidity, low temperature). Reference is made to the relevant technical chemistry literature for further details on plasticizers.

Also suitable as plasticizers are diurethanes, which can be prepared, for example, by reacting diols, having OH end groups, with monofunctional isocyanates, by selecting the stoichiometry such that substantially all free OH groups react. Optionally excess isocyanate can then be removed from the reaction mixture, for example, by distillation. A further method for preparing diurethanes consists of reacting monofunctional alcohols with diisocyanates, whereby all NCO groups are reacted if possible.

In preferred embodiments, the curable compositions comprise at least one plasticizer, for example a polydimethylsiloxane, which is different from the polymer (A).

The composition according to the present invention may comprise at least one adhesion promoter.

Suitable as adhesion promoters are, for example, resins, terpene oligomers, coumarone/indene resins, aliphatic petrochemical resins, and modified phenol resins. Suitable within the context of the present invention are, for example, hydrocarbon resins, as can be obtained by polymerization of terpenes, primarily α- or β-pinene, dipentene, or limonene. These monomers are generally polymerized cationically with initiation using Friedel-Crafts catalysts. The terpene resins also include, for example, copolymers of terpenes and other monomers, for example, styrene, α-methylstyrene, isoprene, and the like. The aforesaid resins are used, for example, as adhesion promoters for contact adhesives and coating materials. Also suitable are terpene-phenol resins, which are prepared by the acid-catalyzed addition of phenols to terpenes or rosin. Terpene-phenol resins are soluble in most organic solvents and oils and miscible with other resins, waxes, and natural rubber. Also suitable as an additive in the aforesaid sense within the context of the present invention are the rosin resins and derivatives thereof, for example, the esters thereof.

Also suitable are silane adhesion promoters, particularly alkoxysilanes, with a (further) functional group such as, e.g., an amino group, a mercapto group, an epoxy group, a carboxyl group, a vinyl group, an isocyanate group, an isocyanurate group, or a halogen. Examples are γ-mercaptopropyltrimethoxysilane, γ-mercaptopropyltriethoxysilane, γ-mercaptopropylmethyldimethoxysilane, γ-glycidoxypropyltrimethoxysilane, γ-glycidoxypropyltriethooysilane, γ-glycidoxypropylmethyldimethoxysilane, β-carboxyethyltriethoxysilane, β-carboxyethylphenylbis-(2-methoxyethoxy)silane, N-β-(carboxymethyl)aminoethyl-γ-aminopropyltrimethoxysilane, vinyltrimethoxysilane, vinyltriethoxysilane, γ-acroyloxypropylmethyltriethoxysilane, γ-isocyanatopropyltrimethoxysilane, γ-isocyanatopropyltriethoxysilane, γ-isocyanatopropylmethyldiethoxysilane, γ-isocyanatopropylmethyldimethoxysilane, tris(trimethoxysilyl)isocyanurate, and γ-chloropropyltrimethoxysilane.

In preferred embodiments, the adhesion promoter is an aminosilane, preferably selected from the group consisting of 3-aminopropyltrimethoxysilane, 3-aminopropyltriethoxysilane, aminomethyltrimethoxysilane, aminomethyltriethoxysilane, 3-aminopropylmethyldiethoxysilane, (N-2-aminoethyl)-3-aminopropyltrimethoxysilane, (N-2-aminoethyl)-3-aminopropyltriethoxysilane, diethylenetriaminopropyltrimethoxysilane, phenylaminomethyltrimethoxysilane, (N-2-aminoethyl)-3-aminopropylmethyldimethoxysilane, 3-(N-phenylamino)propyltrimethoxysilane, 3-piperazinylpropylmethyldimethoxysilane, 3-(N,N-dimethylaminopropyl)aminopropylmethyldimethoxysilane, tri[(3-triethoxysilyl)propyl]amine, tri[(3-trimethoxysilyl)propyl]amine, and the oligomers thereof, 3-(N,N-dimethylamino)propyltrimethoxysilane, 3-(N,N-dimethylamino)-propyltriethoxysilane, (N,N-dimethylamino)methyltrimethoxysilane, (N,N-dimethylamino)methyltriethoxysilane, 3-(N,N-diethylamino)propyltrimethoxysilane, 3-(N,N-diethylamino)propyltriethoxysilane, (N,N-diethylamino)methyltrimethoxysilane, (N,N-diethylamino)methyltriethoxysilane, bis(3-trimethoxysilyl)propylamine, bis(3-triethoxysilyl)propylamin, 4-amino-3,3-dimethylbutyltrimethoxy silane and 4-amino-3,3-dimetylbuthyltriethoxy silane and mixtures thereof, particularly preferably of 3-aminopropyltriethoxysilane, aminomethyltriethoxysilane, 3-(N,N-dimethylamino)propyltriethoxysilane, (N,N-dimethylamino)methyltriethoxysilane, 3-(N,N-diethylamino)propyltriethoxysilane, (N,N-diethylamino)methyltriethoxysilane, 4-amino-3,3-dimetylbuthyltriethoxy silane and bis(3-triethoxysilyl)propylamine.

According to a preferred embodiment of the invention, the composition comprises at least one adhesion promoter, preferably at least one aminosilane or its oligomer, in an amount of up to 10 wt.%, based on the total weight of the composition. If a mixture of adhesion promoters is used, the amounts refer to the total amount of adhesion promoters in the composition.

In various embodiments, the curable compositions may contain at least one stabilizer, selected from antioxidants, UV stabilizers, and drying agents in the composition.

All conventional antioxidants may be used as antioxidants. They are preferably present up to about 7% by weight, particularly up to about 5% by weight, based on the total weight of the composition.

The composition herein can contain UV stabilizers, which are preferably used up to about 2% by weight, preferably about 1% by weight. The so-called hindered amine light stabilizers (HALS) are particularly suitable as UV stabilizers. It is preferred within the context of the present invention if a UV stabilizer is employed, which carries a silyl group and is incorporated into the end product during crosslinking or curing. The products Lowilite 75 and Lowilite 77 (Great Lakes, USA) are particularly suitable for this purpose. Further, benzotriazoles, benzophenones, benzoates, cyanoacrylates, acrylates, sterically hindered phenols, phosphorus, and/or sulfur can also be added.

It is often useful to stabilize the compositions in regard to penetrating moisture by means of drying agents in order to increase the storability (shelf life) still further.

Such an improvement in storability can be achieved, for example, by using drying agents. All compounds that react with water with the formation of a group inert to the reactive groups present in the preparation are suitable as drying agents and thereby undergo the smallest possible changes in their molecular weight. Furthermore, the reactivity of the drying agents to moisture penetrating into the preparation must be higher than the reactivity of the groups of the silyl group-bearing polymer of the invention present in the preparation

Isocyanates, for example, are suitable as drying agents.

Advantageously, however, silanes are used as drying agents. For example, vinylsilanes such as 3-vinylpropyltriethoxysilane, oxime silanes such as methyl-O,O',O"-butan-2-one-trioximosilane or O,O',O",O‴-butan-2-one-tetraoximosilane (CAS Nos. 022984-54-9 and 034206-40-1) or benzamidosilanes such as bis(N-methylbenzamido)methylethoxysilane (CAS No. 16230-35-6) or carbamatosilanes such as carbamatomethyltrimethoxysilane. The use of methyl-, ethyl-, or vinyltrimethoxysilane, tetramethyl- or tetraethylethoxysilane is also possible. Vinyltrimethoxysilane and tetraethoxysilane are particularly suitable in terms of cost and efficiency.

Also suitable as drying agents are the aforesaid reactive diluents, provided they have a molecular weight (Mₙ) of less than about 5000 g/mol and have end groups whose reactivity to penetrated moisture is at least as high as, preferably higher than, the reactivity of the reactive groups of the polymer used according to the invention.

Lastly, alkyl orthoformates or alkyl orthoacetates can also be used as drying agents, for example, methyl or ethyl orthoformate or methyl or ethyl orthoacetate.

The compositions generally contain about 0 to about 6% by weight of drying agent, based on the total weight of each composition.

The debondable moisture curable composition according to the invention may be a one-component composition or a two-component composition in which the separated two components are mixed at the time of use. In the case of the one-component composition, each component of the composition may be stored in a single container. In the case of the two-component composition, components are typically stored in a pack having two separate chambers so that the components from one chamber (Part A) do not interact with the components from the other chamber (Part B) during storage. Suitable packs are, for example, double cartridges, such as twin or coaxial cartridges, or multi-chamber tubular pouches with adapters. Preference is given to mixing Part A and Part B with the aid of a static mixer that can be fitted onto the pack having two chambers.

The present invention further relates to a cured product of a debondable moisture curable composition according to the present invention. The debondable moisture curable composition according to the present invention can be cured at a temperature within the range of 0 °C to 100 °C. When cured, the cured product exhibits a good adhesion.

The present invention further relates to use of a debondable moisture curable composition according to the present invention as an adhesive, sealing, or coating material. The compositions are suitable, inter alia, for bonding plastics, metals, glass, ceramic, wood, wood-based materials, paper, paper-based materials, rubber, and textiles, for gluing floors, and for sealing building elements, windows, wall and floor coverings, and joints in general. In this case, the materials can be bonded to themselves or as desired to one another.

The present invention further relates to a bonded structure comprising: a first substrate; a second substrate; and a layer of a debondable moisture curable composition or cured product according to the present invention, wherein said layer of a debondable moisture curable composition or cured product is disposed on a surface of the first substrate and/or on a surface of the second substrate.

In addition, the present invention relates to a method of debonding said bonded structure according to the present invention, wherein the method comprises the steps of: i) applying a heat; and, ii) debonding the surfaces, wherein the temperature applied in step i) is preferably from 100 to 400 °C, more preferably from 200 to 350 °C, and it is preferably applied preferably for a duration of from 1 to 120 mins, more preferably from 4 to 15 mins.

The following examples serve to explain the invention, but the invention is not limited thereto.

### Examples

### Synthesis of Crosslinkers (component (B))

The following Crosslinkers 1 and 2 were synthesized as described below.

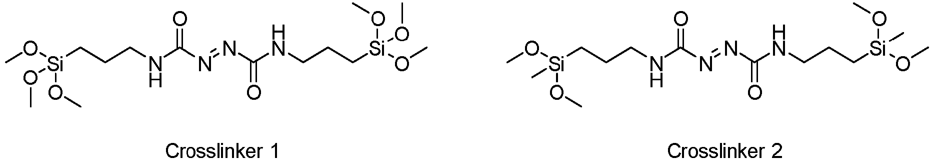

### Crosslinker 1

Under a nitrogen atmosphere, a solution of diisopropyl azodicarboxylate (5.06 g, 25.00 mmol, 1.0 eq) in diethyl ether (100 ml) was cooled to -10 °C. A solution of 3-aminopropyltrimethoxysilane (8.96 g, 50.00 mmol, 2.0 eq) in diethyl ether (100 ml) was added dropwise. Afterwards, the reaction mixture was kept at -10 °C for 5 h, slowly brought to room temperature and left stirring for 15 h. Subsequently, solvent and isopropanol formed during the reaction were removed under reduced pressure.

### Crosslinker 2

Under a nitrogen atmosphere, a solution of diisopropyl azodicarboxylate (5.06 g, 25.00 mmol, 1.0 eq) in diethyl ether (100 ml) was cooled to -10°C. A solution of 3-aminopropyldimethoxymethylsilane (8.16 g, 50.00 mmol, 2.0 eq) in diethyl ether (100 ml) was added dropwise. Afterwards, the reaction mixture was kept at -10 °C for 5 h, slowly brought to room temperature and left stirring for 15 h. Subsequently, solvent and isopropanol formed during the reaction were removed under reduced pressure.

Examples 1 and 2, and Comparative Example 1 were prepared by mixing the materials listed in Table 1. The same moles of Crosslinker 1 and Crosslinker 2 and twice the moles of methyltrimethoxysilane were used in Examples 1, 2, and 3, respectively.

**Table 1**

| Raw materials (wt%) | Example 1 | Example 2 | Comparative Example 1 |
|---|---|---|---|
| OH-terminated PDMS (Wacker FD20) | 66.91 | 69.25 | 79.25 |
| Crosslinker 1 | 32.34 | | |
| Crosslinker 2 | | 30.00 | |
| methyltrimethoxysilane | | | 20.00 |
| (3-Aminopropyl)-trimethoxysilane | 0.25 | 0.25 | 0.25 |
| Bis(neodecanoyloxy)dioctylstannane | 0.50 | 0.50 | 0.50 |

Tensile strength and elongation at break of the cured silicones were measured in accordance with DIN 53504. The samples were cured in a mold at 23°C/50% rH over 7 days. The samples were measured at room temperature and after being heated to 200 °C, 250 °C or 300 °C for 5 minutes each. The specimen type S2 (Dog bone) was used and the speed of the pull head in the dynamometer was 200 mm/min.

In addition to the raw materials listed in Table 1, 8 wt% of hydrophobic fumed silica treated with dimethyldichlorosilane (Aerosil^{®} R 974) was added for measuring lap shear strength. The lap shear samples were prepared with a bondline thickness of 2 mm and an overlap area of 15x25 mm using glass substrates. The lap shear strength of the cured silicones were measured in accordance with DIN EN 1465 with a speed of 50 mm/min at room temperature and after being heated to 200 °C, 250 °C or 300 °C for 10 minutes each.

**Table 2 (untreated, at RT)**

| | Example 1 | Example 2 | Comparative Example 1 |
|---|---|---|---|
| Tensile Strength | 5.15 MPa | 3.56 MPa | 0.38 MPa |
| Elongation at Break | 171.2% | 171.98% | 117.93% |
| Lap Shear Strength | 3.00 MPa | 2.49 MPa | 0.70 MPa |

**Table 3 (After heating to 200 °C for 5 minutes)**

| | Example 1 | Example 2 | Comparative Example 1 |
|---|---|---|---|
| Tensile Strength | 4.38 MPa | 3.24 MPa | 0.40 MPa |
| Elongation at Break | 159.93% | 162.56% | 117.89% |
| Lap Shear Strength | 2.42 MPa | 2.06 MPa | 0.79 MPa |

**Table 4 (After heating to 250 °C for 5 minutes)**

| | Example 1 | Example 2 | Comparative Example 1 |
|---|---|---|---|
| Tensile Strength | 0.97 MPa | 0.62 MPa | 0.36 MPa |
| Elongation at Break | 70.19% | 82.35% | 106.55% |
| Lap Shear Strength | 1.77 MPa | 1.01 MPa | 0.77 MPa |

**Table 5 (After heating to 300 °C for 5 minutes)**

| | Example 1 | Example 2 | Comparative Example 1 |
|---|---|---|---|
| Tensile Strength | 0.41 MPa | 0.20 MPa | 0.29 MPa |
| Elongation at Break | 80.59% | 85.43% | 108.49% |
| Lap Shear Strength | 0.22 MPa | 0.17 MPa | 0.84 MPa |

The cured compositions of Examples 1 and 2 showed good mechanical properties, e.g., high tensile strength, elongation at break, and lap shear strength, in the beginning. After heating, they showed a significant reduction in their mechanical properties which lead to easy and efficient debonding of the materials from the substrate. In contrast, the cured composition of Comparative Example 1 did not show a substantial reduction in its mechanical properties after heating.

## Claims

1. A debondable moisture curable composition comprising
(A) at least one silane-modified polymer and/or at least one organopolysiloxane polymer;
(B) at least one crosslinker having the general formula (1), 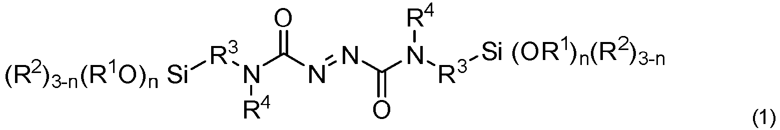 wherein
R¹ is independently selected from an optionally substituted hydrocarbon radical, preferably an alkyl group preferably having 1 to 18 carbon atoms, or a carboxylic ester group, preferably acetate or methyl lactate;
R² is independently selected from an optionally substituted hydrocarbon radical, preferably an alkyl group preferably having 1 to 18 carbon atoms, a cycloalkyl group preferably having 5 to 18 carbon atoms, or an aryl group preferably having 6 to 18 carbon atoms;
R³ is selected from a branched or unbranched, and saturated or unsaturated, aliphatic, aromatic or mixed aliphatic/aromatic hydrocarbon radical which is optionally substituted with at least one functional group, preferably an alkylene radical having 1 to 30 carbon atoms;
R⁴ is selected from hydrogen, an optionally substituted hydrocarbon radical, preferably an alkyl group preferably having 1 to 10 carbon atoms, a cycloalkyl group preferably having 5 to 18 carbon atoms, or an aryl group preferably having 6 to 18 carbon atoms; and
n is 1, 2 or 3; and
(C) at least one curing catalyst.

2. The debondable moisture curable composition according to claim 1, wherein the at least one silane-modified polymer has the general formula (2)
Y-[Xₒ-R-Si(R^{a})k(R^{b})₃₋ₖ]ₚ (2),
wherein
X is a divalent linking group containing at least one heteroatom;
Y denotes an x-valent polymer radical bonded via nitrogen, oxygen, sulfur, or carbon;
R is selected from a divalent hydrocarbon residue having 1 to 12 carbon atoms;
each R^{a} is, independently of one another, selected from a hydrocarbon residue containing 1 to 20 carbon atoms and each R^{b} is, independently of one another, selected from a hydroxyl group or a hydrolysable group, wherein R^{a} and R^{b} are substituents directly bound with the Si atom or the two of the substituents R^{a} and R^{b} form a ring together with the Si atom to which they are bound;
k is 0, 1, or 2;
o is 0 or 1; and
p is an integer from 1 to 10.

3. The debondable moisture curable composition according to claim 1 or 2, wherein the at least one organopolysiloxane polymer has unit formula (3)
(R^{c}₃₋ₓR^{d}ₓSiO_{1/2})ₘ(R^{c}_{2-y}R^{d}_{y}SiO_{2/2})_{D}(R^{c}_{1-z}R^{d}_{z}SiO_{3/2})_{T}(SiO_{4/2})_{Q} (3),
wherein each R^{c} is independently selected from the group consisting of substituted or unsubstituted hydrocarbyl groups, which may be optionally interrupted by at least one heteroatom, a hydroxy group, hydrogen, hydrolysable groups; each R^{d} is independently selected from aliphatically unsaturated groups; x has a value from 0 to 3, y has a value from 0 to 2, and z has a value from 0 to 1; subscripts M, D, T, and Q represent mole fractions of each unit in the unit formula, and subscripts M, D, T, and Q have values such that preferably 0<M≤0.3, preferably 0.4≤D<1, preferably 0≤T≤0.2 and preferably 0≤Q≤0.3, with the proviso that M+D+T+Q=1.

4. The debondable moisture curable composition according to at least one of the preceding claims, wherein R¹ is independently selected from an alkyl group having 1 to 10 carbon atoms, preferably an alkyl group having 1 to 6 carbon atoms, more preferably a methyl or ethyl group, or a carboxylic ester group, preferably acetate or methyl lactate.

5. The debondable moisture curable composition according to at least one of the preceding claims, wherein R² is independently selected from an alkyl group having 1 to 10 carbon atoms, preferably an alkyl group having 1 to 6 carbon atoms, more preferably a methyl group, a cycloalkyl group having 5 to 18 carbon atoms, or an aryl group having 6 to 18 carbon atoms, preferably a phenyl group.

6. The debondable moisture curable composition according to at least one of the preceding claims, wherein R³ is selected from a saturated or unsaturated alkylene radical having 1 to 30 carbon atoms, preferably 1 to 20 carbon atoms, more preferably 1 to 10 carbon atoms, particularly preferably is propylene.

7. The debondable moisture curable composition according to at least one of the preceding claims, wherein R⁴ is selected from hydrogen, an alkyl group having 1 to 10 carbon atoms, a cycloalkyl group having 5 to 18 carbon atoms, or an aryl group having 6 to 18 carbon atoms, preferably is hydrogen.

8. The debondable moisture curable composition according to at least one of the preceding claims, wherein n is 2 or 3.

9. The debondable moisture curable composition according to at least one of the preceding claims, further comprising at least one filler.

10. The debondable moisture curable composition according to at least one of the preceding claims, wherein the composition is a one-component composition or a two-component composition.

11. A cured product of a debondable moisture curable composition according to at least one of the preceding claims.

12. Use of a debondable moisture curable composition according to at least one of claims 1 to 10 as an adhesive, sealing, or coating material.

13. A bonded structure comprising:
a first substrate;
a second substrate; and
a layer of a debondable moisture curable composition according to at least one of claims 1 to 10 or a layer of a cured product according to claim 11,
wherein said layer of a debondable moisture curable composition or cured product is disposed on a surface of the first substrate and/or on a surface of the second substrate.

14. A method of debonding the bonded structure according to claim 13, wherein the method comprises the steps of: i) applying a heat; and, ii) debonding the surfaces.

15. The method according to claim 14, wherein the temperature applied in step i) is from 100 to 400 °C, preferably from 200 to 350 °C, and it is applied for a duration of from 1 to 120 mins, preferably from 4 to 15 mins.
